# EUROPEAN PATENT APPLICATION

(11) **EP 1 806 650 A2**
(43) Date of publication of application: **11.07.2007**
(21) Application number: 06024852.3
(22) Date of filing: 30.11.2006
(51) Int. Cl.: G06F 3/06

(54) **Information processing apparatus, controller and file reading method**

(30) Priority: 09.12.2005 JP 2005357050
(71) Applicant: MegaChips LSI Solutions Inc., Osaka-shi, Osaka 532-0003 (JP)
(72) Inventor: Kawamura, Atsufumi, Osaka-shi Osaka 532-0003 (JP)
(74) Representative: Winter, Brandl, Fürniss, Hübner Röss, Kaiser, Polte Partnerschaft Patent- und Rechtsanwaltskanzlei

(57) **Abstract**

In a memory (4), a file is stored at discontinuous page addresses. The information thereon is recorded in FAT of the memory (4). When an application program in a host system (2) performs a read operation for the file, a FAT system refers to the FAT to read out page indexes of the file. Then, the page indexes are stored in a page index buffer (32) included in a memory controller (3). When a DMAC (22) outputs a read command, a page index transfer sequencer (34) replaces an address part of this read command with the page indexes and outputs page-replaced read commands to the memory (4).

## Description

### BACKGROUND OF THE INVENTION

### Field of the Invention

The present invention relates to an apparatus for processing information recorded in a memory device and a controller.

### Description of the Background Art

Some semiconductor memories allow a read operation on a page-by-page basis for the purpose of speedup of data access. For example, an entire memory area is divided into areas (pages) of several KBytes and a CPU specifies the first address of each page, to perform a read operation for data. A NOR-type flash memory allows both page access and random access. A NAND-type flash memory allows only page access.

A file system is used to access data stored in a hard disk or a semiconductor memory on a file-by-file basis. The file system manages information on the location of each file stored in the hard disk or the semiconductor memory. Specifically, the information on location is chain information of logical addresses for pages in which the file is stored. If a FAT system is used as a file system, the location information of the file is recorded in FAT (File Allocation Tables) stored in a memory device.

When a read instruction for a file is executed by an application program, a file system acquires chain information of logical addresses indicating the locations of the specified file. Then, pages specified by these logical addresses are sequentially read out by a driver program, to read the file.

In general, data constituting one file are stored in continuous pages, i.e., pages having continuous logical addresses. In such a case, it is valid to read a file by a DMAC (Direct Memory Access Controller).

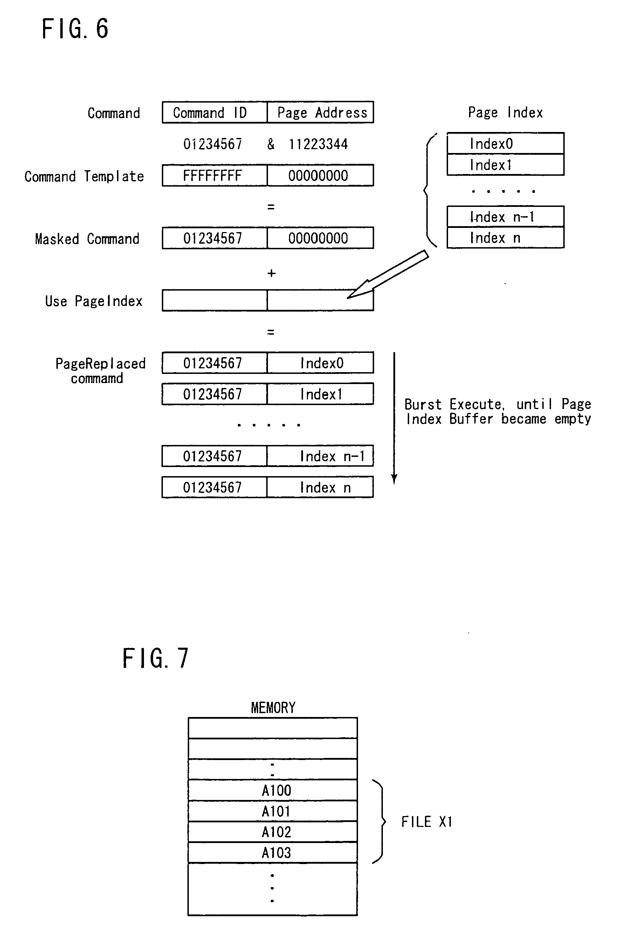

As shown in Fig. 7, for example, a file X1 is stored at four continuous logical addresses A100 to A103 of a memory (assuming that physical addresses and logical addresses are in a one-to-one correspondence with each other). The driver program checks if data constituting the object file are stored in continuous pages, or in other words, if the data are stored in areas having continuous logical addresses. If the data are stored in continuous pages, the driver program executes a continuous read operation with the DMAC. Specifically, the DMAC specifies the logical address of first page, i.e., A100, and outputs a command for reading data of four pages. With a command for one operation sent from the DMAC, it is thereby possible to perform a burst transfer in which data of four pages are continuously read out.

In the above case where data to be read out are stored in the pages having the continuous addresses, it is possible to perform a burst transfer by the DMAC and this ensures a speedup in data processing. In addition, since it is possible to reduce the number of interrupts in the DMA transfer, the operation efficiency can be also improved.

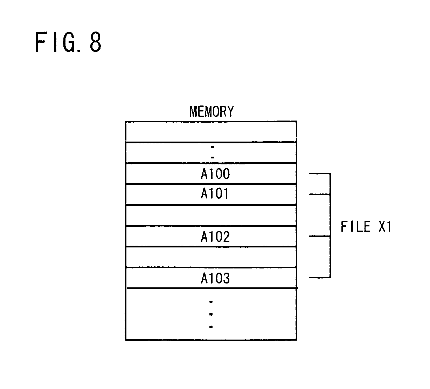

There is a case, however, where one file is stored in pages having discontinuous logical addresses (if physical addresses and logical addresses are in a one-to-one correspondence with each other, this is a case where one file is stored in discontinuous physical addresses). As shown in Fig. 8, for example, a file X1 is stored in discontinuous pages. In this case, the DMAC performs the following three operations of:
(1) continuously reading data at the logical addresses A 100 to A101 (burst transfer);
(2) reading data at the logical address A102; and
(3) reading data at the logical address A103.

Specifically, a burst transfer is performed for a section including continuous logical addresses and the DMA transfer is once finished, and then an interrupt is caused again to perform the next DMA transfer. In other words, in the above case, three interrupts occur and the file X1 is read out through three DMA transfers. Thus, in the case where the file is stored in discontinuous pages, there arises a problem of reduced efficiency in data transfer.

### SUMMARY OF THE INVENTION

The present invention is intended for an information processing apparatus for processing information stored in a memory device. According to the present invention, the information processing apparatus comprises a host system for processing information stored in the memory device; and a controller for controlling access to the memory device, and in the information processing apparatus of the present invention, the host system includes a file system used for management of information stored in the memory device, and the controller comprises a page index buffer for storing page indexes of a file stored in the memory device, which is managed by the file system, and replacement element, receiving a read command for the file from the host system, for sequentially replacing an address part of the read command with page indexes stored in the page index buffer to continuously transfer page-replaced read commands to the memory device.

In the information processing apparatus of the present invention, it is possible to read all the data corresponding to the page indexes when a processing unit generates one read command.

According to a preferred embodiment of the present invention, the host system includes a DMA controller, and a read command for the file, which is outputted from the host system, is controlled by the DMA controller and page-replaced read commands obtained by sequentially replacing an address part of the read command with page indexes in the replacement element are burst transferred.

It is thereby possible to perform an efficient data transfer while reducing a load of a CPU.

According to another preferred embodiment of the present invention, a discontinuous file is stored at discontinuous page addresses in the memory device, discontinuous page indexes of the discontinuous file are stored in the page index buffer, and the replacement element replaces an address part of a read command with discontinuous page indexes and the DMA controller thereby reads out the discontinuous file with one burst transfer.

Since the DMA controller reads out the discontinuous file by one burst transfer, it is possible to significantly increase the efficiency of data transfer.

Therefore, it is an object of the present invention is to provide a technique to read out a file with high efficiency even if the file is stored at discontinuous pages.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of an information processing apparatus in accordance with a preferred embodiment of the present invention;
Fig. 2 is a view showing a functional hierarchy of the information processing apparatus;
Fig. 3 is a flowchart showing an operation for reading a file in accordance with the preferred embodiment;
Fig. 4 is a view showing a memory in which each of files is stored at discontinuous addresses;
Fig. 5 is a view showing a state where page indexes are stored in a page index buffer;
Fig. 6 is a view showing an image of command replacement;
Fig. 7 is a view showing a memory map in which a file is stored in continuous areas; and
Fig. 8 is a view showing a memory map in which a file is stored in discontinuous areas.

### DESCRIPTION OF THE PREFERRED EMBODIMENTS

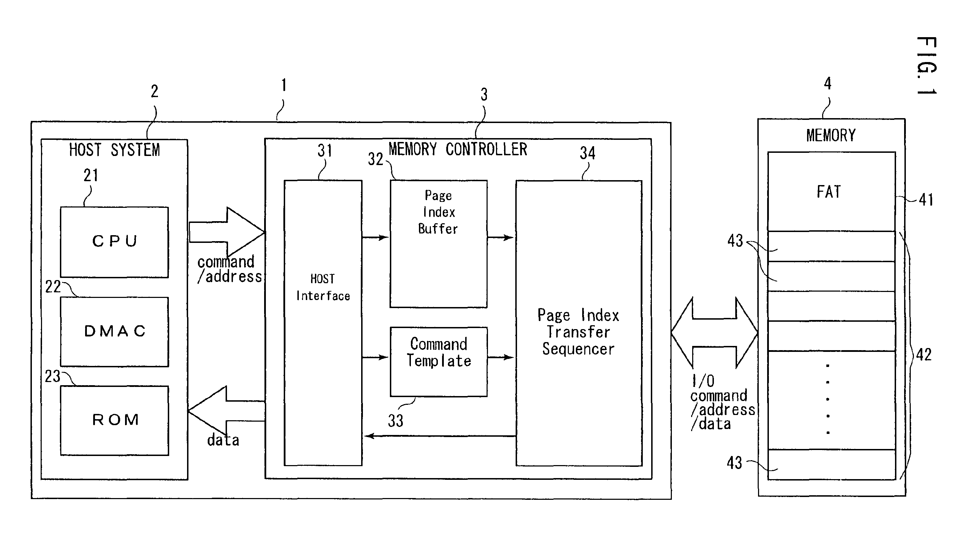

The preferred embodiment of the present invention will be discussed, referring to figures. Fig. 1 is a functional block diagram of an information processing apparatus 1 in accordance with the preferred embodiment of the present invention. The information processing apparatus 1 is an apparatus for reading a file stored in a memory 4 and performing a variety of information processings. In this preferred embodiment, the memory 4 is a semiconductor memory such as a flash memory.

Further, in this preferred embodiment, the information processing apparatus 1 controls the memory 4 with a FAT file system. As shown in Fig. 1, the memory 4 comprises a FAT area 41 and a data area 42. In the data area 42, material substances of program files and data files are stored, and in the FAT area 41, information on management of files is recorded.

As shown in Fig. 1, the data area 42 of the memory 4 is divided into a plurality of page areas 43, and the memory 4 is access-controlled on a page-by-page basis. In other words, a read operation and a write operation for data is performed on a page-by-page basis. Therefore, if one file is divided into a plurality of pages to be stored, page chain information for each file is recorded in the FAT area 41.

The information processing apparatus 1 is, for example, a game device. In this case, the memory 4 corresponds to a game cartridge and the information processing apparatus 1, as the game device, executes a game program stored in the memory 4.

The information processing apparatus 1 comprises a host system 2 and a memory controller 3. The host system 2 is a central processing part for performing a general control on the information processing apparatus 1, and comprises a CPU 21, a DMAC (Direct Memory Access Controller) 22 and a ROM 23. In the ROM 23, various software as described later are stored. Other than those, the information processing apparatus 1 further comprises various input devices, output devices and the like. If the information processing apparatus 1 is a game device, the information processing apparatus 1 comprises a liquid crystal display, a speaker and the like as the output device and comprises various operation buttons as the input device.

The memory controller 3 comprises a host interface 31, a page index buffer 32, a command template generator 33 and a page index transfer sequencer 34.

The host interface 31 is an interface used for inputting and outputting of commands and data to/from the host system 2. In other words, the host interface 31 is an interface used for receiving a read command or a write command specifying an address part from the host system 2 and that used for outputting data read out from the memory 4 to the host system 2.

The page index buffer 32 is a buffer into which page indexes of a file to be read out are stored. In other words, it is a buffer in which information on all the pages where the file to be read out is stored is recorded. If information on all the pages of the file can not be stored in the page index buffer 32, however, the information is divided into a plurality of pieces on some pages and storage is done a plurality of times. As discussed later, the addresses stored in the page index buffer 32 are the physical addresses of the memory 4. If a file is stored in discontinuous pages, discontinuous physical addresses are recorded, without any change, in the page index buffer 32.

The command template generator 33 generates a template for a read command which is generated in the page index transfer sequencer 34. Then, the page index transfer sequencer 34 replaces an address part of a command generated by the command template generator 33 with page indexes which are stored in the page index buffer 32 and outputs page-replaced read commands to the memory 4. The command template generator 33 and the page index transfer sequencer 34 are formed of hardware.

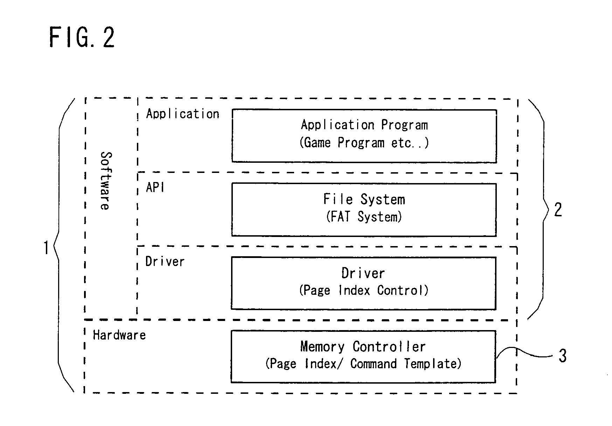

Fig. 2 is a view showing a structure of the information processing apparatus 1 which is separated into a software layer and a hardware layer. As shown in Fig. 2, the software layer consists of an application layer of higher level, an API (Application Program Interface) layer of middle level, lower than the application layer, and a driver layer of lower level, and the hardware layer is located lower than the driver layer. In this preferred embodiment, the application layer corresponds to an application program such as a game program, the API layer corresponds to the FAT system and the driver layer corresponds to a driver (device driver) for controlling the memory controller 3.

The application program is stored in the memory 4. The FAT system is constituted of programs and information, such as tables, recorded in the memory 4 (information stored in the FAT area 41), and the program part is (these programs are) stored in the ROM 23. The drivers are stored in the ROM 23.

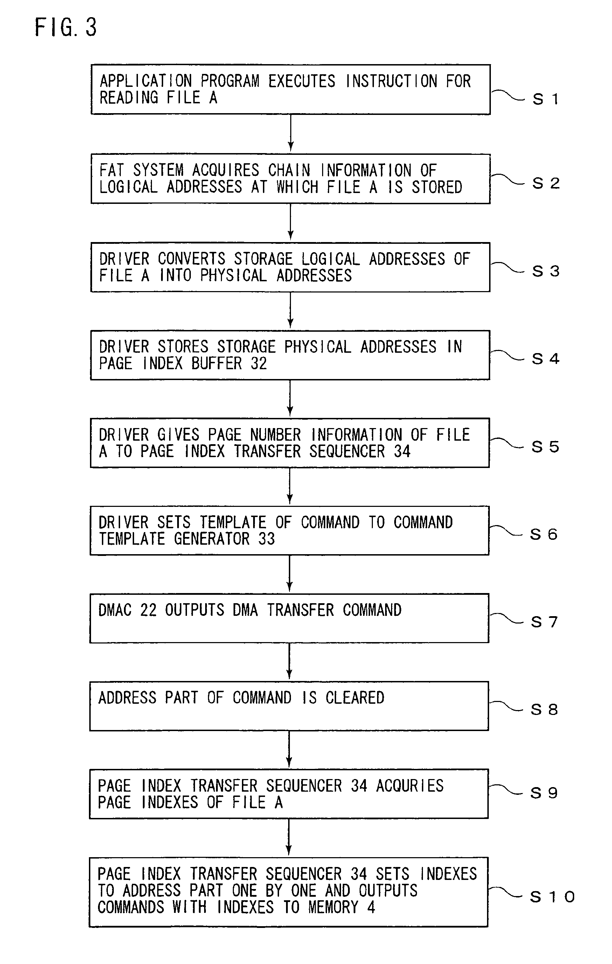

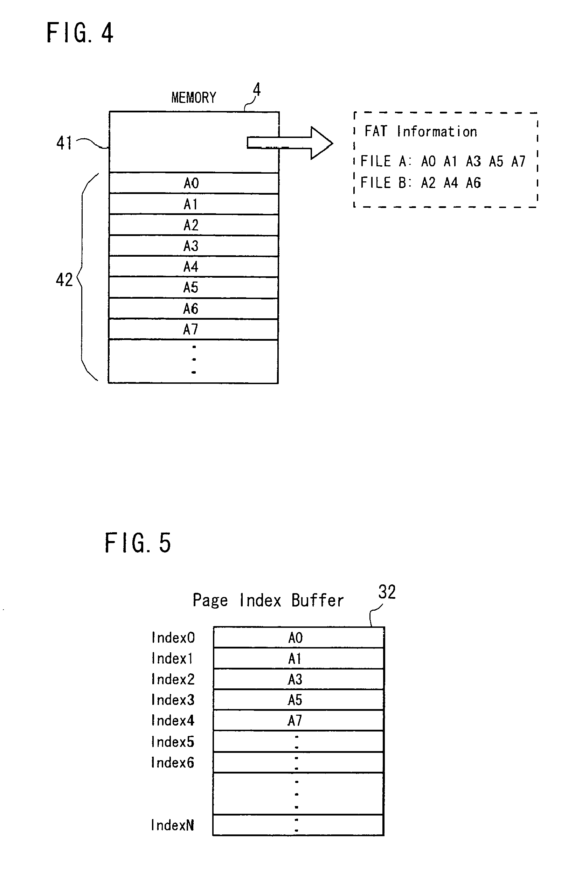

With the above constitution, a flow of memory access operation by the information processing apparatus 1 in this preferred embodiment will be discussed, referring to the flowchart of Fig. 3. In this case, it is assumed that files are recorded in the memory 4 as shown in Fig. 4. Specifically, files A and B are stored at page addresses A0 to A7 in the data area 42, and the information on these locations is recorded in the FAT area 41. More specifically, the file A is stored at the page addresses A0, A1, A3, A5 and A7 and the file B is stored at the page addresses A2, A4 and A6. In other words, both the files A and B are stored in discontinuous pages.

The page addresses A0 to A7 are logical addresses recorded in the FAT area 41 of the memory 4. In this preferred embodiment, however, the logical addresses recorded in the FAT area 41 of the memory 4 are in a one-to-one correspondence with the physical addresses of the memory 4. Therefore, in this preferred embodiment, the files A and B are stored in discontinuous pages both as the logical addresses and as the physical addresses.

Now, discussion will be made on an operation of the application program for reading the file A. First, the application program executes an instruction for reading the file A (Step S1). In actual, the instruction is executed by the CPU 21.

Next, the FAT system accesses the memory 4 and refers to the FAT area 41 recorded in the memory 4. With this operation, the chain information of the logical addresses (the chain information of the page addresses) at which the file A is stored is acquired (Step S2). Specifically, the information indicating that the file A is stored at the logical addresses A0, A1, A3, A5 and A7 is acquired.

The storage address information of the file A, which is acquired by the FAT system, is given to the driver. The driver converts the storage logical addresses into physical addresses (Step S3). In order to perform this logical-physical address conversion, the host system 2 holds a correspondence table of page addresses.

Receiving the storage physical addresses of the file A, the driver stores these physical addresses into the page index buffer 32 (Step S4). Fig. 5 is a view showing indexes of the file A, which are stored in the page index buffer 32. As shown in Fig. 5, the physical addresses A0, A1, A3, A5 and A7 are stored in memory areas corresponding to the indexes 0 to 4. Since physical addresses and logical addresses are in a one-to-one correspondence with each other in this preferred embodiment, as discussed earlier, addresses stored in the page index buffer 32 are also represented by the same reference signs A0, A1, A3, A5 and A7, for easy description.

The driver gives page number information of the file A to the page index transfer sequencer 34 (Step S5). In this case, since the file A is stored in five page areas of the memory 4, the page number information of "5" is given to the page index transfer sequencer 34. The page index transfer sequencer 34 has a buffer and stores the page number information of the file, which is received from the driver, into the buffer.

In addition, the driver sets a template of a command to the command template generator 33 (Step S6). Specifically, the driver specifies a format of a read command for the memory 4. Specifically, a start bit position and the number of bits on the operator part, a start bit position and the number of bits on the address part and the like are set.

With these operations, a preparation for output of the read command is completed, and subsequently, the DMAC 22 outputs a DMA transfer command (Step S7). The DMA transfer command is a command for reading the file A, and this command only needs to specify the instruction word indicating a read command and does not need to specify a read address.

The read command outputted by the DMAC 22 is given to the command template generator 33 through the host interface 31. In the command template generator 33, the read command is masked by a command template, to clear the address part (Step S8).

Fig. 6 is a view showing replacement of a read command. In Fig. 6, "Command" represents a read command outputted from the DMAC 22. In this command, a code ("01234567" (hexadecimal)) indicating a read instruction (Read) is specified as "Command ID". Since the address part does not particularly need to be specified, it contains insignificant code ("11223 344" (hexadecimal)).

In Fig. 6, "Command Template" represents a command template generated in the command template generator 33. In this command template, all "F" (hexadecimal) is specified in the operator part of the command and all "0" (hexadecimal) is specified in the address part.

By masking the "Command" outputted from the DMAC 22 with the "Command Template", "Masked Command" is obtained. In other words, a logical product of the "Command" and the "Command Template" is the "Masked Command", and the address part thereof is cleared to all "0".

Next, the masked read command is outputted to the page index transfer sequencer 34. The page index transfer sequencer 34 acquires the page indexes of the file A form the page index buffer 32 on the basis of the page number information acquired from the driver (Step S9). In this case, since the page number information of "5" is acquired from the driver, the indexes of five areas, which are stored in the page index buffer 32, are acquired. Specifically, the physical addresses A0, A1, A3, A5 and A7 are acquired.

Then, the page index transfer sequencer 34 sets the indexes acquired from the page index buffer 32 to the address part of the masked read command one by one and outputs the page-replaced read commands to the memory 4 (Step S10). In this case, first, the page-replaced read command with the physical address A0 set in the address part is outputted to the memory 4, and subsequently the page-replaced read command with the physical address A1 set in the address part is outputted to the memory 4. In this manner, the page-replaced read commands with the physical addresses A3, A5 and A7 set in the address part, respectively, are sequentially outputted to the memory 4 in this order. In other words, receiving one read command for a file from the DMAC 22, the page index transfer sequencer 34 continuously outputs page-replaced read commands with all the page indexes which are received from the page index buffer 32.

With this operation, data stored at the physical addresses A0, A1, A3, A5 and A7 are sequentially outputted from the memory 4. These data are given to the host system 2 through the host interface 31. With these operations, the read operation for the file A is completed.

Thus, in this preferred embodiment, even if a file is stored at discontinuous logical addresses, it is possible to perform a DMA burst transfer, and this allows a speedup in file reading. In the above case, the file A can be read out with one DMA burst transfer. Though the information on all the pages of the file A is stored in the page index buffer 32 in the case of Fig. 5, however, if the number of pages in which a file is stored is larger than the number of indexes of the page index buffer 32, the driver may divide the information on pages into a plurality of pieces and store the divided piece of information in the page index buffer 32 a plurality of times. In a case, for example, where the page size is 2 Kbytes and the page index buffer 32 can store 64 indexes, the amount of data, which can be read out at a time, is 128 Kbytes. Therefore, in order to read a file of 1 Mbytes, the operation has to be separately performed eight times in units of 128 Kbytes.

Acquisition of page indexes and storage of the page indexes in the buffer are performed by software such as the file system and the driver and replacement of the address part of the command is performed by hardware, i.e., the page index transfer sequencer 34. In other words, a high-level function, not proper for hardware, is installed as part of the file system and a continuous read operation for pages which is a low-level function proper for hardware is installed as a sequencer and a buffer (register). This allows well-balanced load distribution among operations for software and those for hardware, and it is thereby possible to construct a high-performance and efficient system.

Though the DMA burst transfer is performed through replacement with page indexes in the above preferred embodiment, the present invention can be applied to a transfer by the CPU as well as the DMA transfer. Specifically, in the above preferred embodiment, there may be a case where instead of the DMAC 22, the CPU 21 generates a read command and the address part of the read command generated by the CPU 21 is replaced with the page indexes as shown in Fig. 6 or the like.

Further, the present invention is effective when the logical addresses of pages at which the file is stored are discontinuous. As discussed in the above preferred embodiment, however, if logical addresses and physical addresses are in a one-to-one correspondence with each other, the file is stored in pages also having discontinuous physical addresses. Therefore, the present invention can be applied to both cases where the logical addresses are discontinuous and where the physical addresses are discontinuous.

While the invention has been shown and described in detail, the foregoing description is in all aspects illustrative and not restrictive. It is therefore understood that numerous modifications and variations can be devised without departing from the scope of the invention.

## Claims

1. An information processing apparatus(1) for processing information stored in a memory device(4), comprising:
a host system(2) for processing information stored in said memory device(4); and
a controller(3) for controlling access to said memory device(4),
wherein said host system(2) includes a file system used for management of information stored in said memory device(4), and
said controller(3) comprises
a page index buffer(32) for storing page indexes of a file stored in said memory device(4), which is managed by said file system, and
a replacement element(34), receiving a read command for said file from said host system(2), for sequentially replacing an address part of said read command with page indexes stored in said page index buffer(32) to continuously transfer page-replaced read commands to said memory device(4).

2. The information processing apparatus(1) according to claim 1, wherein
page indexes of said file stored in said memory device(4) are read out by said file system,
the page indexes read out by software are stored in said page index buffer(32), and
said replacement element(34) is formed of hardware.

3. The information processing apparatus(1) according to claim 1 or 2, wherein
said host system(2) includes a DMA controller(22), and
a read command for said file, which is outputted from said host system(2), is controlled by said DMA controller(22) and page-replaced read commands obtained by sequentially replacing an address part of said read command with page indexes in said replacement element(34) are burst transferred.

4. The information processing apparatus(1) according to claim 3, wherein
a discontinuous file is stored at discontinuous page addresses in said memory device(4),
discontinuous page indexes of said discontinuous file are stored in said page index buffer(32), and
said replacement element(34) replaces an address part of a read command with discontinuous page indexes and said DMA controller(22) thereby reads out said discontinuous file with one burst transfer.

5. A controller(3) incorporated in an information processing apparatus(1), wherein
said information processing apparatus(1) is an apparatus for processing information stored in a memory device(4) and comprises a host system(2) which includes a file system used for management of information stored in said memory device(4),
said controller(3) comprising:
a page index buffer(32) for storing page indexes of a file stored in said memory device(4), which is managed by said file system, and
a replacement element(34), receiving a read command for said file from said host system(2), for sequentially replacing an address part of said read command with page indexes stored in said page index buffer(32) to continuously transfer page-replaced read commands to said memory device(4).

6. The controller(3) according to claim 5, wherein
page indexes of said file stored in said memory device(4) are read out by said file system,
the page indexes read out by software are stored in said page index buffer(32), and
said replacement element(34) is formed of hardware.

7. The controller(3) according to claim 5 or 6, wherein
said replacement element(34) sequentially replaces an address part of a read command generated by a DMA controller(22) with page indexes, and page-replaced read commands which are thereby obtained are burst transferred.

8. A method of reading a file stored in a memory device(4), comprising the steps of:
acquiring page indexes at which said file is stored and storing said page indexes in a buffer(32) by software, and
generating a read command for said file by a processing unit, and
sequentially replacing an address part of said read command with said page indexes stored in said buffer(32) and continuously outputting page-replaced read commands to said memory device(4) by hardware.

9. The method of reading a file according to claim 8, wherein
said processing unit is a DMA controller(22), and
one read command is generated by said DMA controller(22) and page-replaced read commands obtained by sequentially replacing an address part of said read command with page indexes are burst transferred.
